# EUROPEAN PATENT APPLICATION

(11) **EP 3 249 145 A1**
(43) Date of publication of application: **29.11.2017**
(21) Application number: 16740058.9
(22) Date of filing: 14.01.2016
(51) Int. Cl.: E05F 11/38, B60J 1/17

(54) **HOLDER AND VEHICLE APERTURE PLATE WITH HOLDER**

(30) Priority: 22.01.2015 JP 2015010102
(71) Applicant: Asahi Glass Company, Limited, Tokyo 100-8405 (JP)
(72) Inventor: SASE, Masayuki, Tokyo 100-8405 (JP)
(74) Representative: Müller-Boré & Partner Patentanwälte PartG mbB
(86) International application number: PCT/JP2016/051022
(87) International publication number: WO 2016/117451

(57) **Abstract**

A holder which can be used in common for window plates different in thickness and in which an adhesive is less likely to be localized and overflow when a vehicle window plate is fitted in place.

A holder 103 is to be attached to a vehicle window plate 102 via an adhesive 305, and the holder 103 is characterized by comprising a bottom portion 201, a first side portion 202 and a second side portion 203 facing the first side portion 202, to form a concave portion in its cross-sectional view, and having an elastically deformable flexible portion 204 extending from an end portion of the first side portion 202 in parallel to the first side portion 202, wherein the first side portion 202 has a first inner surface 301 and a first outer surface 302, the flexible portion 204 has a second inner surface 306 and a second outer surface 307, the first inner surface 301 an the second inner surface 306 are present in the same plane, and the flexible portion 204 has a first convex portion 308 extending from the second inner surface 306 toward the second side portion.

## Description

### TECHNICAL FIELD

The present invention relates to a holder and a vehicle window plate with a holder, particularly, a holder to be attached to a vehicle window plate via an adhesive and at the same time to be attached to a lifting device for lifting and lowering the vehicle window plate, and a vehicle window plate which is provided with such a holder.

### BACKGROUND ART

Heretofore, as a vehicle glass plate holder to be attached to a vehicle glass plate via an adhesive, a vehicle glass plate holder to be used in common for glass plates different in thickness, as disclosed in Patent Document 1, is known.

Patent Document 1 discloses, as shown in Fig. 9, a vehicle glass plate holder having a flexible portion which is formed on a facing side portion and which is deformable in a direction in which the space of the concave portion is deformed.

### PRIOR ART DOCUMENT

### PATENT DOCUMENT

Patent Document 1: JP-A-2009-133094

### DISCLOSURE OF INVENTION

### TECHNICAL PROBLEM

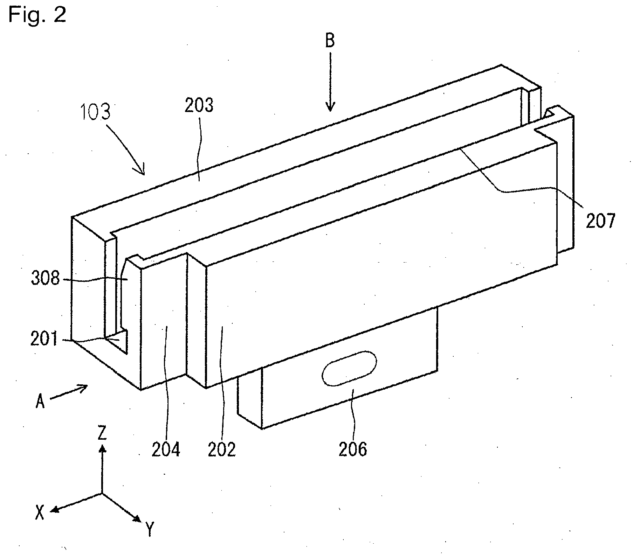

At the time of attaching a vehicle glass plate holder to a vehicle glass plate via an adhesive, in order to confirm that the adhesive is spread over the entire facing surfaces of the vehicle glass plate and the glass plate holder, it is desirable, along with insertion of the vehicle glass plate into the concave portion, to let the adhesive overflow from the concave portion over the entire length of a side of the upper end portion of the facing side portion forming the concave portion (see the side 207 of the upper end portion in the after-described first embodiment (Fig. 2) of the present invention).

However, at that time, at a location where the adhesive has overflowed in a large amount, it is required that after confirming the spread of the adhesive, the adhesive overflowed at that location is wiped off by a worker.

In Patent Document 1, as shown in Fig. 9, the volume V₁ of the space of the gap formed between the vehicle glass plate 30 and the facing side portion 38 of the vehicle glass plate holder is set independently regardless the thickness of the glass plate 30, while the volume V₂ of the space of the gap formed between the vehicle glass plate 30 and the facing side portion 36 of the vehicle glass plate holder changes depending on the thickness of the vehicle glass plate. With respect to the volume V₂ which changes depending on the plate thickness, if the volume of the space when the thickness of the glass plate 30 is thin, is represented by V₂₋₁, since the space is narrowed in a tapered shape, especially at the flexible portion 44, the adhesive is likely to be localized and overflow. Therefore, it was necessary that after confirming the spread of the adhesive, the adhesive overflowing from the vicinity of the space V₂₋₁ was wiped off by a worker.

Incidentally, such a problem is relevant not only to a glass plate for a vehicle, but may similarly occur in a case where a vehicle window pate such as a resin plate is used for a vehicle.

In view of the background as described above, in this application, the present invention is to provide a holder which can be used in common for window plates different in thickness and in which an adhesive is less likely to be localized and overflow when a vehicle window plate is fitted in place, and a vehicle window plate with a holder, which is provided with such a holder.

### SOLUTION TO PROBLEM

To achieve the above object, the present invention provides a holder to be attached to a vehicle window plate via an adhesive, characterized in that
said holder comprises a bottom portion, a first side portion and a second side portion facing the first side portion, to form a concave portion in its cross-sectional view, and
has an elastic deformable flexible portion extending from an end portion of the first side portion in parallel to the first side portion, wherein
the first side portion has a first inner surface and a first outer surface,
the flexible portion has a second inner surface and a second outer surface,
said first inner surface and said second inner surface are present in the same plane, and
the flexible portion has a first convex portion extending from the second inner surface toward the second side portion.

Further, the present invention provides a vehicle window plate with a holder, which is provided with the above-described holder.

### ADVANTAGEOUS EFFECTS OF INVENTION

According to the present invention, it is possible to provide a holder which can be used in common for window plates different in thickness and in which an adhesive is less likely to be localized and overflow at the time when a vehicle window plate is fitted in place, and a vehicle window plate with a holder, which is provided with such a holder.

### BRIEF DESCRIPTION OF DRAWINGS

Fig. 1 is a configuration diagram of a lifting device for lifting or lowering a vehicle glass plate with a holder according to the first embodiment of the present invention.
Fig. 2 is a perspective view of a holder according to the first embodiment in this application.
Fig. 3A is a top view when the perspective view of the holder according to the first embodiment in this application is viewed in the direction of the arrow B in Fig. 2.
Fig. 3B is a top view when the perspective view of the holder according to the first embodiment in this application is viewed in the direction of the arrow B in Fig. 2, and particularly is a view showing a case where the thickness of the vehicle glass plate is large.
Fig. 4 is a side view when the perspective view of the holder according to the first embodiment in this application is viewed in the direction of the arrow A in Fig. 2.
Fig. 5 is a side view when a modified example of the holder according to the first embodiment in this application is viewed in the direction of the arrow A in Fig. 2.
Fig. 6 is a top view when a modified example of the holder according to the first embodiment in this application is viewed in the direction of the arrow B in Fig. 2.
Fig. 7 is a diagram illustrating a procedure for preparation of a vehicle window plate with a holder, in this application.
Fig. 8 is a top view when a vehicle glass plate holder according to the second embodiment in this application is viewed in the direction of the arrow B in Fig. 2
Fig. 9 is a top view of a holder according to a conventional example.

### DESCRIPTION OF EMBODIMENTS

Now, with reference to the drawings, specific embodiments of the holder and the vehicle window plate with a holder, according to the present invention, will be described.

In the drawings for illustrating the embodiments, a coordinate is defined by arrows at the lower left in each Fig, and description will be made with reference to the coordinate, as the case requires. Further, in this specification, the "X direction" is intended to refer not only to a direction from the root toward the tip of the arrow indicating the X coordinate, but also a direction from the tip toward the root as inverted by 180°. Likewise, the "Y direction" or the "Z direction" is intended to refer not only a direction from the root to the tip of the arrow indicating the Y coordinate or the Z coordinate, but also a direction from the tip toward the root as inverted by 180°. Further, the X direction also refers to the peripheral direction of the vehicle window plate or the third direction; the Y direction also refers to the second direction, and the Z direction also refers to the vertical direction or the first direction.

In this specification, in the following, as a typical example of the vehicle window plate, the case of a glass plate will be described, but the vehicle window plate is not limited to a glass plate.

In this specification, terms such as "parallel", "perpendicular", etc. are used to allow a displacement of a certain degree that does not impair the effects of the present invention. For example, based on the positional relationship of parallel or vertical in the strict sense, an error of about ± 5° is allowable.

### (First embodiment)

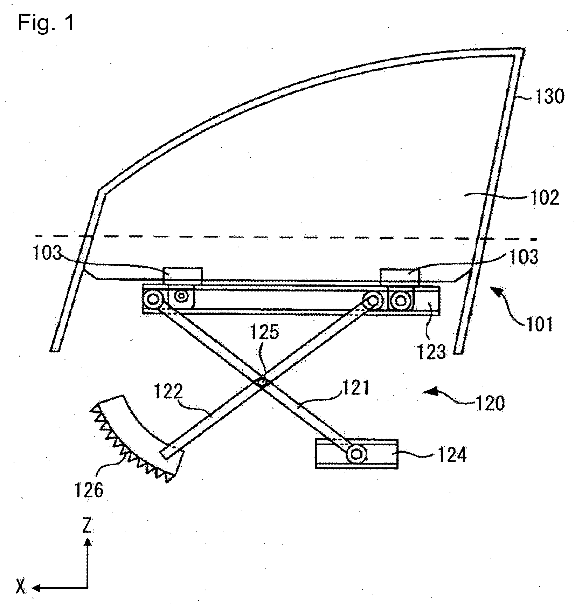

Fig. 1 shows a configuration diagram of a lifting device 120 for lifting and lowering a vehicle glass plate 101 with a holder (i.e. a vehicle window plate with a holder) according to the first embodiment of the present invention.

In this embodiment, the vehicle glass plate 101 with a holder is one to be mounted on a door of a vehicle, and one to be lifted or lowered vertically along the window frame 130 by the lifting device 120. The lifting device 120 is an arm type regulator and constituted by e.g. two arms 121 and 122, a lifting rail 123, a fixed rail 124 and a regulator (not shown). The broken line in the Fig. schematically shows the position of the lower end portion of the opening of the door of the vehicle.

The two arms 121 and 122 are connected to each other pivotally by a fulcrum 125 as the axis. The lifting rail 123 extends in the horizontal direction, and is a rail movable up and down vertically relative to the vehicle door. The upper end portions of the arms 121 and 122 are both horizontally slidably attached to the lifting rail 123. Further, the fixed rail 124 extends in the horizontal direction, and is a rail fixed to the vehicle door. The lower end portion of the arm 121 is horizontally slidably attached to the fixed rail 124, and the lower end portion of the arm 122 is connected to a regulator via a gear 126. In such a configuration, when the gear 126 is driven via the regulator, the arms 121 and 122 are rotated about the fulcrum 125 as the axis, so that the lifting rail 123 is moved up and down.

Here, the vehicle glass plate 101 with a holder is not limited for the front door or rear door of a motor vehicle, so long as it is to be lifted and lowered relative to a vehicle body. Further, the lifting device 12 for lifting and lowering the vehicle glass plate 101 with a holder is not limited to the above-described arm type regulator and may also be a wire type regulator.

The holder-attached vehicle glass plate 101 comprises a vehicle glass plate 102 (i.e., a vehicle window plate) and two vehicle glass plate holders 103 (simply referred to also as holders). The vehicle glass plate 102 is, for example, tempered glass or laminated glass, and has a predetermined thickness. The vehicle glass plate 102 can be suitably used as a vehicle glass plate, so long as its plate thickness is within a predetermined range, e.g. within a range of from 2.8 mm to 5.3 mm, and when a tempered glass is used as a vehicle glass plate, the thickness is more preferably from 3.0 mm to 4.0 mm.

Each vehicle glass plate holder 103 is, while being mounted via an adhesive on the vehicle glass plate 102, attached to the lifting rail 123 of the lifting device 120. That is, the vehicle glass plate 102 is connected to the lifting rail 123 via a vehicle glass plate holder 103. Thus, the vehicle glass plate 102 is integrally lifted by lifting of the lifting rail 123 of the lifting device 120. Here, the above-mentioned adhesive to connect the vehicle glass plate 102 and the vehicle glass plate holder 103, is an adhesive of e.g. urethane or silicone-type.

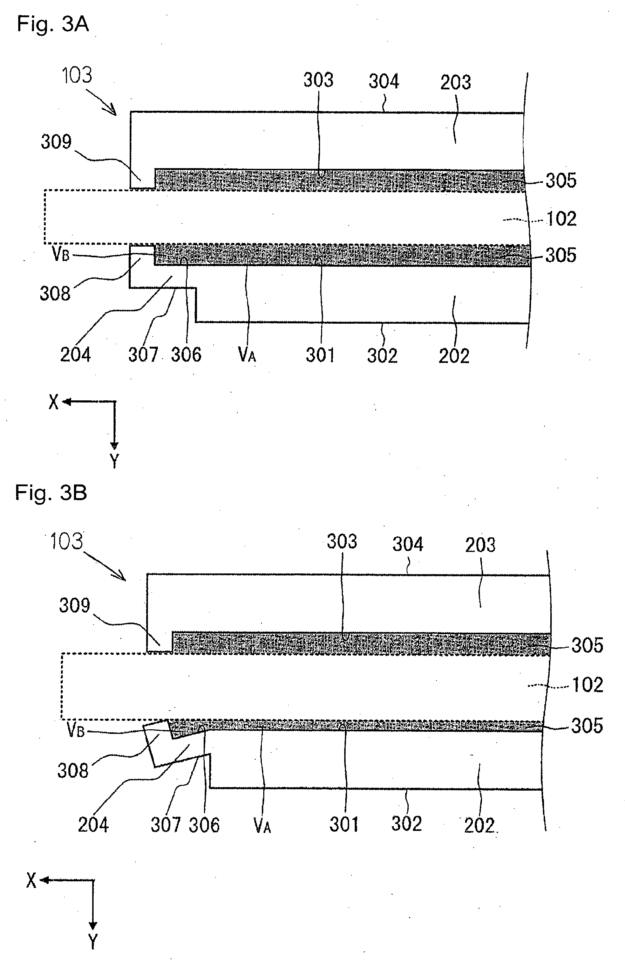

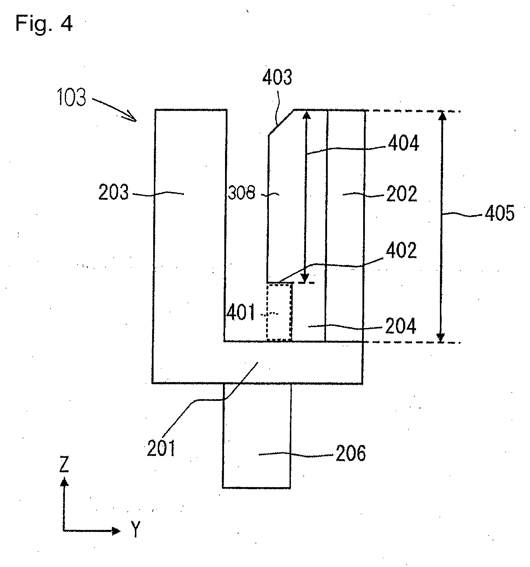

Next, with reference to Figs. 2, 3A, 3B and 4, the holder according to the first embodiment of the present invention will be described. Fig. 2 shows a perspective view of the holder according to the first embodiment of the present invention, Figs. 3A and 3B are each a top view when Fig. 2 is viewed in the direction of the arrow B, and Fig. 4 is a side view when Fig. 2 is viewed in the direction of the arrow A.

In this embodiment, the vehicle glass plate holder 103 comprises a bottom portion 201, a first side portion 202 extending in the Z direction perpendicular from the bottom portion 201, and a second side portion 203 facing the first side portion 202, to form a concave portion having a U-shaped cross section for fitting the vehicle glass plate in place. Here, the cross section is a cross section obtained by cutting the vehicle glass plate holder in the YZ plane (the plane passing through the first side portion 202 and the second side portion 203). That is, the X direction is a direction perpendicular to the cross section.

The bottom portion 201 is formed in a horizontal shape having a width slightly larger than the maximum thickness of the vehicle glass plate 102 to be inserted, and a length extending in the peripheral direction of the vehicle glass plate to be inserted (the direction perpendicular to the cross section; the X direction).

The first side portion 202 and the second side portion 203 extend upward in the Z direction from the respective ends of the bottom portion 201 by sandwiching the bottom portion 201 and are disposed to face each other. The first side portion 202 and the second side portion 203 have predetermined thicknesses in the Y direction, respectively, and are disposed so as to sandwich the front and back surfaces of the vehicle glass plate 102 when the vehicle glass plate 102 is fitted in place.

The first side portion 202 is formed so that its length in the X direction is shorter than the length in the X direction of the second side portion 203, and has, at an end portion in the X direction of the first side portion 202, an elastically deformable flexible portion 204 extending in parallel with the first side portion 202. The flexible portion 204 is provided at both end portions in the X direction of the first side portion 202. Here, the X direction is a direction perpendicular to the Z direction (the first direction) and perpendicular to the Y direction (the second direction) from the first side portion 202 toward the second side portion 203.

The first side portion 202 has a first inner surface 301 which is located closer to the second side portion 203 and a first outer surface 302 which is located farther from the second side portion 203. Further, the flexible portion 204 has a second inner surface 306 which is located closer to the second side portion 203 and a second outer surface 307 which is located farther from the second side portion 203, and the second side portion 203 has a third inner surface 303 which is located closer to the first side portion 202 and a third outer surface 304 which is located farther from the first side portion 202.

The first inner surface 301 of the first side portion 202 and the second inner surface 306 of the flexible portion 204 are present in the same plane, and the second outer surface 307 of the flexible portion 204 is formed on the second inner surface 306 side than the first outer surface 302, so that the thickness in the Y direction of the flexible portion 204 is smaller than the thickness of the first side portion 202. That is, the flexible portion 204 is formed to be in a plate shape and thin and to be continuous with the first side portion 202.

Here, the first inner surface 301 and the second inner surface 306 being "present in the same plane" is meant that the second inner surface 306 is present on an extension of the plane formed by the first inner surface 301. Further, in this application, the "same plane" is one to allow a displacement of a certain degree that does not impair the effects of the present invention, and, for example, based on the first inner surface 301 as a reference, it is allowable that the second inner surface 306 deviates about ± 2 mm or varies in an angle of about ± 3°.

The flexible portion 204 has a first convex portion 308 extending from the second inner surface 306 toward the second side portion 203.

The first convex portion 308 will be, when the vehicle glass plate 102 is inserted, in contact with the vehicle glass plate 102 to support the vehicle glass plate 102 in cooperation with the second side portion 203.

Thus, the first inner surface 301 and the second inner surface 306 are in the same plane, and the first convex portion 308 is provided, whereby the width in the Y direction of the space V_{B} formed by the flexible portion 204 and the vehicle glass plate 102 becomes equal to the width in the Y direction of the space V_{A} formed by the first side portion 202 and the vehicle glass plate 102.

Therefore, at the time when the vehicle glass plate 102 is inserted, the adhesive 305 tends to be less likely to be localized and overflow. Further, the flexible portion 204 is the elastically deformable and thus can be used in common for vehicle glass plates 102 different in thickness.

Further, a case where a vehicle glass plate 102 with a large thickness is inserted, is shown in Fig. 3B. The width in the Y direction of the space V_{B} formed by the flexible portion 204 and the vehicle glass plate 102 and the width in the Y direction of the space V_{A} formed by the first side portion 202 and the vehicle glass plate 102, are preferably equal to each other. But, in a case where the plate thickness of the vehicle glass plate 102 is large, the flexible portion 204 is elastically deformed by the vehicle glass plate 102 so as to be bent downward in the Y direction. Therefore, in this case, the width in the Y direction of the space V_{B} formed between the vehicle glass plate 102 and the flexible portion 204 becomes slightly wider than the width in the Y direction of the space V_{A} formed by the vehicle glass plate 102 and the first side portion 202.

The adhesive 305 to be extruded by insertion of the vehicle glass plate 102 is likely to flow out from a portion with a relatively narrow space. However, if the length in the X direction of the first side portion 202 is sufficiently longer than the length in the X direction of the flexible portion 204, the adhesive 305 will be distributed along the X direction of the first side portion 202. Thus, it is unlikely that a large amount of the adhesive is locally extruded. Therefore, even if a vehicle glass plate 102 having a large thickness is to be fitted in place, by using the vehicle glass plate holder 103 of the present embodiment, it is possible to let the adhesive 305 be less likely to be localized and overflow.

Here, the length in the X direction of the first side portion 202 is preferably at least twice, more preferably at least 2.5 times, further preferably at least 3 times, the length in the X direction of the flexible portion 204.

As described in the foregoing, by providing the flexible portion 204 present in the same plane as the first inner surface 301, and the first convex portion 308, it is possible to present a holder which can be used in common for window plates different in thickness and wherein the adhesive is less likely to be localized and overflow at the time when the vehicle window plate is inserted.

Further, in this embodiment, the position in the X direction of the end portion, opposite to the first side portion 202, of the flexible portion 204 is the same as the position in the X direction of the end portion of the second side portion 203. That is, it is so constructed that the total length in the X direction of the member consisting of the flexible portion 204 and the first side portion 203, and the total length in the X direction of the second side portion 203 are the same. By such a construction, it is possible to prevent that the adhesive 305 tends to protrude on one surface, for example, in the process of inserting the vehicle glass plate 102 in the concave portion.

Here, the positions in the X direction or the total lengths in the X direction being "the same" allows a displacement of a certain degree that does not impair the effects of the present invention. For example, an error of about ±5 mm is allowable.

Further, in this embodiment, the second side portion 203 has a second convex portion 309 extending from the second inner surface 303 toward the first side portion 202. By such a construction, it is possible to let the adhesive 305 be present in a sufficient amount between the vehicle glass plate 102 and the second side portion 203, whereby the supporting force for the vehicle glass plate 102 is further increased.

In this specification, the first convex portion 308 and the second convex portion 309 may be elastically deformable members or may be members not elastically deformable.

Further, in this embodiment, the first convex portion 308 is formed to extend toward the bottom portion 201, and has a gap portion 401 shown by a broken line in Fig. 4 between the lower end portion 402 of the first convex portion 308 and the bottom portion 201. By thus having the gap portion 401, the first convex portion 308 is not connected to the bottom portion 201, whereby flexibility of the elastic deformation of the flexible portion 204 increases, and it is possible to meet a vehicle glass plate 102 in a wider thickness range. The length in the Z direction of the gap portion 401 is not particularly limited.

Further, in this embodiment, the first convex portion 308 has an oblique side portion 403 at the upper end portion. By having such a tilted portion 403, at the time of inserting the vehicle glass plate 102, it serves as a guide for guiding the vehicle glass plate 102 into the concave portion, whereby it is possible to more accurately fit the vehicle glass plate 102 in place.

Further, the length 404 in the Z direction of the first convex portion 308 (i.e. the length from the upper end portion to the lower end portion 402 of the first convex portion 308) is preferably at least 1/3, more preferably at least 1/2.5, further preferably at least 1/2, of the length 405 in the Z direction of the flexible portion 204 (i.e. from the upper end portion of the flexible portion 204 to the bottom portion 201). By thus setting the length 404 in the Z direction of the first convex portion 308, it is possible to support the vehicle glass plate 102 more stably. Further, the first convex portion 308 may be formed at any position of the flexible portion 204. For example, it may be formed at the center position in the X direction of the flexible portion 204, or may be formed at the center position in the Z direction of the flexible portion 204.

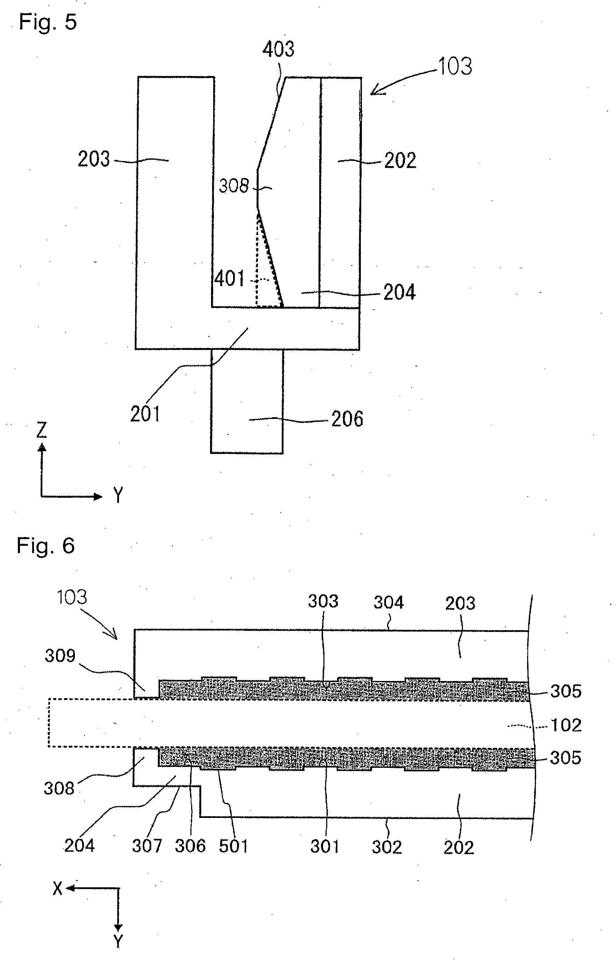

Further, the shape of the first convex portion 308 is not particularly limited, and may, for example, be a shape gradually formed over the entire flexible portion 204 as shown in Fig. 5.

Further, on the first inner surface 301 of the first side portion 202 and on the third inner surface 303, a plurality of groove portions 501 extending in the Z direction from the bottom portion 201 may be formed over the entire surface. That is, the construction will be as shown in Fig. 6 as viewed from the direction of the arrow B in Fig. 2. In this way, it is possible to increase the contact area between the vehicle glass plate 102 and the vehicle glass plate holder 103, and in the process of inserting the vehicle glass plate 102 into the concave portion, the adhesive accumulated in the concave portion tends to be hardly extruded from the inside toward the X direction, such being desirable.

For example, the width in the Y direction of the groove portions 501 is preferably from about 0.5 mm to 1 mm.

Further, as in this embodiment, when such groove portions 501 are formed on the first inner surface 301, the portion other than the groove portions 501 is regarded as the first inner surface 301. Also in a case where, inversely, protrusion portions (not shown) are formed on the first inner surface 301, the portion other than such protrusion portions may be regarded as the first inner surface 301. Otherwise, based on the second inner surface 306, if the width in the Y direction of the groove portions 501 and/or protrusion portions is within about 2 mm, the entire portion including such groove portions 501 and/or protrusion portions may be regarded as the first inner surface 301, and it may be regarded that the second inner surface 306 and the first inner surface 301 are in the same plane.

The vehicle glass plate holder 103 may have a leg portion 206 to be attached to the lifting rail 123.

In this embodiment, the vehicle glass plate holder 103 is formed of a synthetic resin, by using, for example, a polybutylene terephthalate resin, a polyethylene terephthalate resin or a polyamide resin as the main component. The vehicle glass plate holder 103 is molded e.g. by injection molding wherein a synthetic resin material is heated, melted and injected into a mold, followed by being cooled and solidified.

In this embodiment, the flexible portion 204 is assumed to be made of the same material as the bottom portion 201, the first side portion 202 and the second side portion 203. With such a construction, since the material to be used is one type, it becomes easy to control the material and the product quality, and since the molding is carried out in one step, the production process can be simplified.

In the case of using the same material, it is preferred that the distance between the first inner surface 301 and the first outer surface 302 : the distance between the second inner surface 306 and the second outer surface 307, is at least 3 : 1 and at most 5 : 1.

On the other hand, for the flexible portion 204, a material different from the material for the bottom portion 201, the first side portion 202 and the second side portion 203 may be used. Particularly, a material having a higher elasticity may be used. In such a case, it is possible to mold the vehicle glass plate holder 103 by a two-stage injection molding by two types of material (e.g. by a two-color injection molding).

### (Method for insertion of glass plate)

Now, the procedure for preparing a holder-attached vehicle glass plate 101 by attaching the vehicle glass plate holder 103 of this embodiment to the vehicle glass plate 102 via an adhesive 305 will be described.

In order to attach the vehicle glass plate holder 103 to the vehicle glass plate 102 via an adhesive 305, firstly, a suitable amount of an adhesive 305 is applied to a concave portion formed by the bottom portion 201, the first side portion 202 and the second side portion 203, of the vehicle glass plate holder 103 which is molded into the above-mentioned structure. Then, the vehicle glass plate holder 103 having the adhesive 305 applied to the concave portion, is pushed along a peripheral edge portion of the vehicle glass plate 102 so that the vehicle glass plate 102 is inserted in the concave portion against the elastic force of the flexible portion 204, and such pushing is conducted until the peripheral edge portion of the vehicle glass plate 102 abuts against the bottom portion 201 of the vehicle glass plate holder 103.

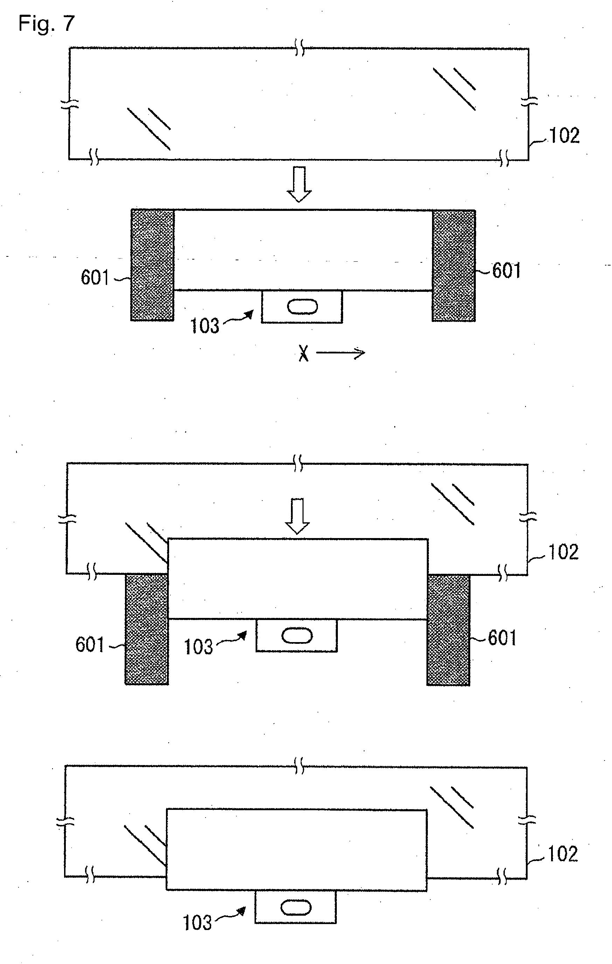

At that time, as shown in Fig. 7, jigs 601 are abutted against both end portions in the X direction of the vehicle glass plate holder 103, and the jigs 601 are pushed down along with insertion of the vehicle glass plate 102, so that the vehicle glass plate 102 is fitted in place. In this way, it is possible to reduce extrusion of the adhesive 305 accumulated in the concave portion from the inside to the X direction. Further, if the vehicle glass plate 102 is inserted in such an insertion method, even if the gap portion 401 is formed as in this embodiment, it is possible to reduce the possibility that the adhesive 305 that has accumulated in the concave portion is pushed out from the gap portion 401 in the X direction from the inside.

Further, at the time when the vehicle glass plate holder 103 having the adhesive 305 applied to the concave portion is pushed along the periphery of the vehicle glass plate 102 so that the vehicle glass plate 102 is inserted in the concave portion, the flexible portion 204 is elastically deformed depending on the plate thickness of the vehicle glass plate 102. When the plate thickness of the vehicle glass plate 102 is relatively thin, the flexible portion 204 will be slightly pushed open in the Y direction against its own elastic force (see Fig. 3A), while as the plate thickness of the vehicle glass plate 102 increases, the flexible portion 204 will be widely pushed open in the Y direction against its own elastic force (see Fig. 3B).

Thereafter, the holder-attached vehicle glass plate 101 having the vehicle glass plate holder 103 mounted on the vehicle glass plate 102 via the adhesive 305, is left as it is, or introduced in a drying furnace, to dry the adhesive 305 between the vehicle glass plate holder 103 and the vehicle glass plate 102. When the adhesive dries, the vehicle glass plate holder 103 and the vehicle glass plate 102 are adhered via the adhesive 305 and thus fixed.

In the case where the gap portion 401 is present, in order that the adhesive 305 will not be pushed out of the gap portion 401 in the X direction, the jigs 601 are pressed against the gap portion 401 until the adhesive is dried and loses fluidity to a certain extent.

Thus, according to the vehicle glass plate holder 103 in this embodiment, even if the thickness of the vehicle glass plate 102 is different within a predetermined range, it is possible to absorb the thickness difference by the elastic deformation of the flexible portion. Therefore, it is possible to realize a vehicle glass plate holder 103 that can be use in common for vehicle glass plates 102 different in thickness.

### (Second embodiment)

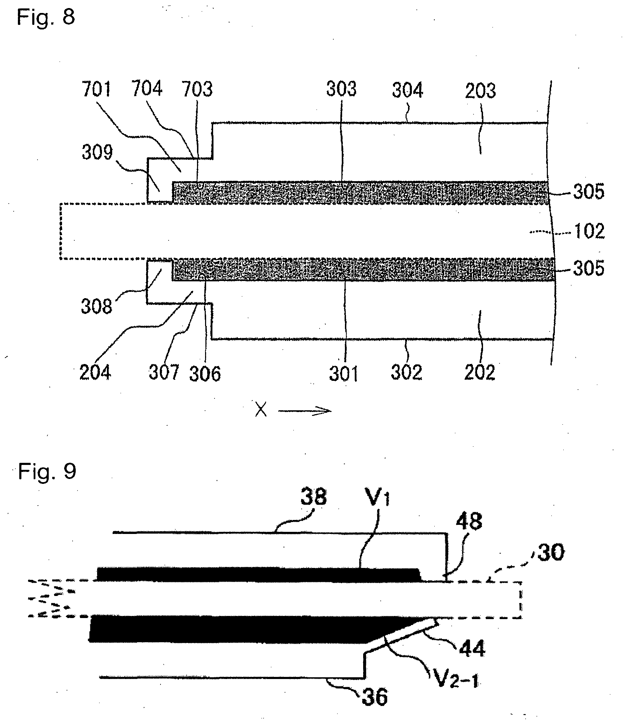

Fig. 8 is a top view when the vehicle glass plate holder according to a second embodiment of the present invention is viewed in the direction of the arrow B in Fig. 2. In Fig. 8, with respect to members having the same constructions as the constructions shown in the first embodiment, the same reference numerals as in Figs. 1 to 5 will be used, and their description will be omitted.

In this embodiment, like the first side portion 202, at an end portion in the X direction of the second side portion 203, an elastically deformable flexible portion 701 extending in parallel with the second side portion 203 is provided. The flexible portion 701 has a fourth inner surface 703 and a fourth outer surface 704, and a second convex portion 309 is formed to extend from the fourth inner surface 703 toward the first side portion 202.

The fourth inner surface 703 and the third inner surface 303 are present in the same plane, and the fourth outer surface 704 is formed on the fourth inner surface 703 side than the third outer surface 304, so that the thickness in the Y direction of the flexible portion 204 becomes smaller than the second side portion 203.

By thus having the flexible portions 204 and 701 provided, it becomes possible for the holder to meet a wider range of plate thickness, and the holder can be used in common for window plates different in thickness.

### INDUSTRIAL APPLICABILITY

The holder of the present invention can be used in common for vehicle window plates different in thickness and can make it possible that an adhesive is less likely to be localized and overflow at the time of inserting the vehicle window plate in place, whereby it is possible to improve the operation efficiency for attaching the holder to the vehicle window plate, and it is useful in the production of a holder-attached vehicle window plate.

The entire disclosure of Japanese Patent Application No. 2015-010102 filed on January 22, 2015 including specification, claims, drawings and summary is incorporated herein by reference in its entirety.

### REFERENCE SYMBOLS

101: holder-attached vehicle glass plate (holder-attached vehicle window plate), 102: vehicle glass plate (vehicle window plate), 103: vehicle glass plate holder (holder), 120: lifting device, 121 and 122: arms, 123: lifting rail, 124: fixed rail, 125: fulcrum, 126: gear, 130: window frame, 201: bottom portion, 202: first side portion, 203: second side portion, 204: flexible portion, 206: leg portion, 207: side of upper end portion, 301: first inner surface, 302: first outer surface, 303: third inner surface, 304: third outer surface, 305: adhesive, 306: second inner surface, 307: second outer surface, 308: first convex portion, 309: second convex portion, 401: gap portion, 402: lower end portion, 403: oblique side portion, 404: length in the Z direction of the first convex portion, 405: length in the Z direction of the flexible portion, 501: groove portion, 601: jig, 701: flexible portion, 703: fourth inner surface, 704: fourth outer surface, V_{A} : space formed by the first side portion 202 and the vehicle glass plate 102, V_{B} : space formed by the flexible portion 204 and the vehicle glass plate 102.

## Claims

1. A holder to be attached to a vehicle window plate via an adhesive, **characterized by** comprising
a bottom portion,
a first side portion extending from the bottom portion in a first direction perpendicular thereto,
a second side portion facing the first side portion,
an elastically deformable flexible portion extending from an end portion of the first side portion in parallel to the first side portion, along a third direction which is perpendicular to the first direction and perpendicular to a second direction directed from the first side portion toward the second side portion, wherein
the first side portion has a first inner surface which is located closer to the second side portion, and a first outer surface which is located farther from the second side portion,
the flexible portion has a second inner surface which is located closer to the second side portion, and a second outer surface which is located farther from the second side portion,
the first inner surface and the second inner surface are present in the same plane, and
the flexible portion has a first convex portion extending from the second inner surface toward the second side portion.

2. The holder according to Claim 1, wherein in the third direction, the position of the end portion, opposite to the first side portion, of the flexible portion, is the same as the position of the end portion of the second side portion.

3. The holder according to Claim 1 or 2, wherein in the third direction, the length of the first side portion is at least 2 times the length of the flexible portion.

4. The holder according to any one of Claims 1 to 3, wherein the flexible portion is made of the same material as the first side portion, and the distance between the first inner surface and the first outer surface : the distance between the second inner surface and the second outer surface, is from 3 : 1 to 5 : 1.

5. The holder according to any one of Claims 1 to 4, wherein the first convex portion has a lower end portion on the bottom portion side, and there is a space between the lower end portion and the bottom portion.

6. The holder according to any one of Claims 1 to 5, wherein in the first direction, the length from an upper end portion of the first convex portion to the lower end portion is at least 1/3 of the length from an upper end portion of the flexible portion to the bottom portion.

7. The holder according to any one of Claims 1 to 6, wherein in the first direction, the first convex portion has an oblique side portion at the upper end portion.

8. The holder according to any one of Claims 1 to 7, wherein the first convex portion is elastically deformable.

9. The holder according to any one of Claims 1 to 8, wherein the second inner surface and/or the first inner surface has a groove portion.

10. A vehicle window plate with a holder, **characterized in that** it is provided with the holder as defined in any one of Claims 1 to 9.
